# FASCICULE DE BREVET EUROPEEN

(11) **EP 1 316 470 B1**
(45) Date de publication et mention de la délivrance du brevet: **16.03.2005**
(21) Numéro de dépôt: 02292882.4
(22) Date de dépôt: 20.11.2002
(51) Int. Cl.: B60N 2/48, B60N 2/44

(54) **Système de déplacement et de blocage en translation d'une tige lisse, par arc-boutement d'une pièce de blocage**
Einrichtung zur Längsverstellung und Arretierung eines glatten Stabes durch Momentensperre eines Sperrelementes
Device for translational moving and arresting of a smooth bar by torque lock of a blocking element

(30) Priorité: 30.11.2001 FR 0115517
(43) Date de publication de la demande: 04.06.2003
(73) Titulaire: Centre d'Etude et de Recherche pour l'Automobile ( CERA), 51100 Reims (FR)
(72) Inventeur: Bonte, Emmanuel, 51100 Reims (FR); Aguilar, Julien, 51170 Arcis-Le-Ponsart (FR)
(74) Mandataire: Geismar, Thierry

(56) Documents cités:
- WO-A-93/12346
- DE-A- 3 810 619
- FR-A- 2 803 563
- GB-A- 2 258 151
- US-A- 3 893 730
- US-A- 4 387 926
- US-A- 4 938 319
- US-A- 5 108 066
- US-A- 5 383 621

## Description

L'invention concerne un système de déplacement et de blocage en translation d'une tige lisse à l'intérieur d'une gaine, ce système étant plus particulièrement destiné à être utilisé pour le réglage en hauteur d'appuis-tête de siège, notamment de véhicule automobile.

Les appuis-tête des véhicules automobiles ont pour fonction de procurer un confort aux passagers, mais plus encore d'assurer leur sécurité. A cet effet, il est indispensable que l'appui-tête, en position d'utilisation, soit fermement maintenu dans la position dans laquelle il a été réglé.

Par ailleurs, le réglage effectué suivant Z doit être maintenu, notamment en déplacement vers le bas, lors d'un choc ou lors d'une manoeuvre involontaire, par exemple lorsqu'un passager appuie sur l'appui-tête.

Les appuis-tête utilisés dans l'industrie automobile comprennent de façon connue un coussin d'appui monté à l'extrémité supérieure d'au moins une tige dont l'autre extrémité pénètre dans le dossier du siège. Lorsque ces appuis-tête sont réglables en hauteur, la ou les tiges sont généralement montées en translation dans des gaines solidaires de l'armature du siège.

Ces tiges comportent alors souvent des crans de blocage permettant à l'utilisateur de bloquer l'appui-tête en hauteur dans un certain nombre de positions prédéfinies. Ces crans permettent un réglage dans un nombre de positions équivalent à celui des crans, mais présentent l'inconvénient de contraindre à un réglage discontinu.

En outre, la présence de ces crans induit un coût supplémentaire non négligeable lors de la fabrication de tels appuis-tête, et une fragilisation potentielle de la tige.

Le document US-A-4 387 926 décrit un système de positionnement de siège de véhicule comprenant une gaine de réception d'une tige en translation. La gaine comprend des éléments de blocage activés au moyen d'une came. La came est actionnée de sorte à faire ce que les éléments de blocage entre en friction contre la tige pour bloquer celle-ci.

Le document FR-A-2 803 563 décrit un système de déplacement et de blocage en translation d'une tige lisse au moyen d'une pièce de blocage comprenant un orifice pour recevoir la tige. La pièce de blocage est actionnée de sorte que l'axe de l'orifice soit incliné par rapport à l'axe de la tige de sorte à bloquer celle-ci dans une position de blocage.

Cependant de tels systèmes de déplacement sont coûteux et de montage difficile.

L'invention vise à pallier ces inconvénients, en proposant notamment un système de déplacement et de blocage en translation d'une tige lisse qui permet non seulement de maintenir fermement l'appui-tête dans la position dans laquelle il a été réglé, mais également d'obtenir un réglage continu et aisé de l'appui-tête en hauteur.

A cet effet, et selon un premier aspect, l'invention propose un système de déplacement et de blocage en translation d'une tige lisse, du type comprenant une gaine destinée à recevoir en translation ladite tige suivant un axe Z, ledit système comprenant un dispositif d'actionnement et une pièce de blocage pourvue d'un orifice destiné à recevoir ladite tige, ledit dispositif d'actionnement comprenant des moyens d'actionnement de ladite pièce qui sont agencés pour coopérer avec des moyens réciproques prévus sur ladite pièce, de sorte à permettre le déplacement réversible de la pièce depuis une première position dans laquelle l'axe Z' de l'orifice est incliné par rapport à l'axe Z d'un angle α suffisant pour permettre le blocage de la tige dans ledit orifice, et une deuxième position dans laquelle l'axe Z' est incliné par rapport à l'axe Z d'un angle α' inférieur à α de sorte que la translation de la tige soit libre, les moyens d'actionnement comprenant au moins une came prévue sur un organe, les moyens réciproques étant formés d'au moins un suiveur de came, l'organe étant mobile en rotation entre une première position inactive et une deuxième position extrême, le passage de l'organe de la première à la deuxième position actionnant le déplacement de la pièce depuis sa première vers sa deuxième position, les moyens d'actionnement comprenant un ressort comprimé entre l'organe et la pièce de blocage, le système comprenant un cavalier associant la pièce, l'organe et le ressort.

Selon un deuxième aspect, l'invention concerne l'utilisation d'un tel système pour le déplacement et le blocage en translation d'au moins une tige lisse d'un appui-tête pour siège de véhicule automobile.

D'autres objets et avantages de l'invention apparaîtront au cours de la description qui suit, faite en référence aux dessins annexés dans lesquels :
- la figure 1 est une vue éclatée partielle du système de déplacement et de blocage en translation d'une tige lisse selon un mode de réalisation, montrant la pièce de blocage, le ressort, l'organe mobile en rotation du système, et le cavalier destiné à associer ces trois éléments une fois montés ;
- la figure 2 est une vue éclatée du système de déplacement et de blocage en translation d'une tige lisse selon une variante du mode de réalisation de la figure 1, montrant en outre la gaine dans laquelle les éléments mentionnés ci-dessus sont disposés ;
- les figures 3a et 3b sont respectivement une vue schématique partiellement en coupe et une vue en perspective du système de déplacement et de blocage en translation d'une tige lisse, selon le mode de réalisation de la figure 1, dans lesquelles la pièce de blocage est dans une première position permettant le blocage en translation de la tige lisse, la vue en coupe montrant la tige insérée dans ledit système ;
- les figures 4a et 4b sont des vues analogues respectivement aux figures 3a et 3b, dans lesquelles la pièce de blocage est déplacée au voisinage de sa deuxième position par rotation de l'organe mobile ;
- les figures 5a et 5b sont des vues analogues respectivement aux figures 3a et 3b, la pièce de blocage ayant été déplacée dans sa deuxième position par déplacement de la tige suivant Z⁺.

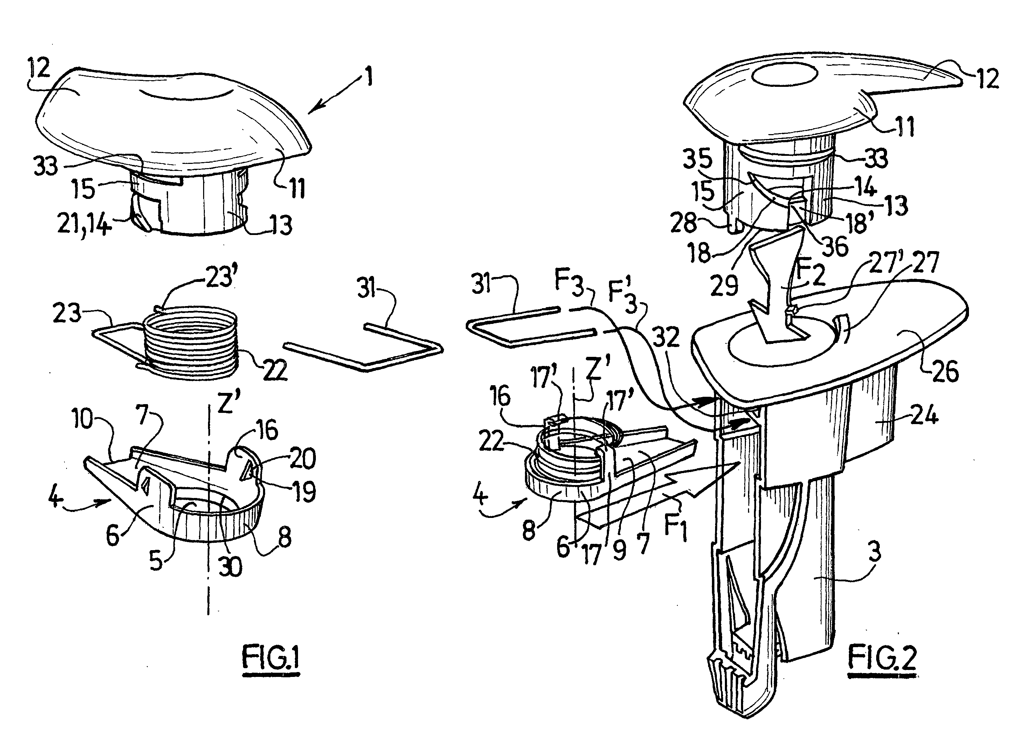

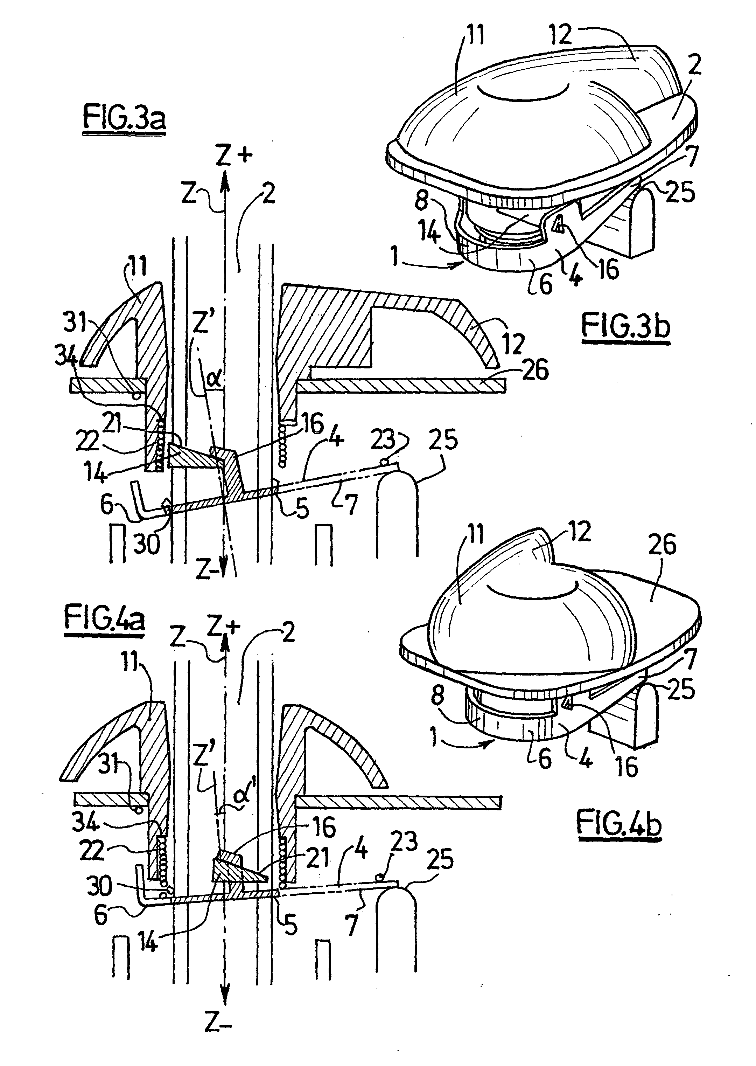

En relation avec les figures 1 à 5, on décrit ci-dessous un mode de réalisation d'un système 1 de déplacement et de blocage en translation d'une tige lisse 2.

Le système 1 comprend une gaine 3 destinée à recevoir en translation une tige lisse 2 suivant un axe Z.

Ce système s'applique typiquement au réglage en hauteur d'un appui-tête (non représenté) pour siège de véhicule automobile, du type comprenant deux tiges lisses 2. Selon une première réalisation, deux gaines 3 sont intégrées à l'appui-tête, chaque tige lisse 2 étant alors montée coulissante à l'intérieur de l'appui-tête. Selon une deuxième réalisation, deux gaines 3 sont intégrées au dossier du siège, chaque tige 2 étant alors montée coulissante dans ledit dossier.

Ainsi, dans la description qui suit, on définit comme Z⁺ la direction vers le haut du véhicule, et Z⁻ la direction vers le bas du véhicule, et comme internes les zones en regard avec l'axe Z, les zones dites externes étant opposées aux zones dites internes.

Selon l'invention, le système 1 comprend une pièce de blocage 4 en translation de la tige lisse 2, pourvue d'un orifice 5 destiné à recevoir ladite tige 2.

Le système 1 comprend en outre un dispositif d'actionnement comprenant des moyens d'actionnement de ladite pièce de blocage 4.

Ces moyens d'actionnement sont agencés pour coopérer avec des moyens réciproques prévus sur ladite pièce 4, de sorte à permettre le déplacement réversible de la pièce 4 depuis une première position dans laquelle l'axe Z' de l'orifice 5 est incliné par rapport à l'axe Z d'un angle α suffisant pour permettre le blocage de la tige 2 dans l'orifice 5, et une deuxième position dans laquelle l'axe Z' est incliné par rapport à l'axe Z d'un angle α' inférieur à α, de sorte que la translation de la tige 2 soit libre.

La pièce de blocage 4 est classiquement réalisée en matériau métallique présentant une rigidité suffisante pour permettre, dans la première position de la pièce, le blocage en translation de la tige lisse 2.

Dans le mode de réalisation représenté sur les figures, la pièce de blocage 4 comprend une partie annulaire 6 pourvue de l'orifice 5 et une extension radiale 7. La pièce 4 comprend en outre une paroi 8 s'étendant perpendiculairement à la surface supérieure 9 de la pièce 4, cette paroi 8 étant disposée autour de ladite surface 9, à l'exception de l'extrémité 10 de la pièce 4.

Le dispositif d'actionnement comprend un organe 11 mobile en rotation entre une première position inactive et une deuxième position extrême, le passage de l'organe 11 de sa première à sa deuxième position actionnant le déplacement de la pièce 4 depuis sa première vers sa deuxième position.

A cet effet, l'organe 11 comprend une poignée 12 permettant sa commande manuelle, et une partie cylindrique creuse 13 de diamètre suffisant pour recevoir la tige lisse 2 en translation. Cette partie cylindrique 13 est prévue pour être placée en regard des orifices de la pièce de blocage 4 et de la gaine 3.

Dans le mode de réalisation représenté, les moyens d'actionnement de la pièce 4 comprennent deux cames 14 situées sur la paroi externe 15 de la partie cylindrique 13, destinées à coopérer avec des suiveurs de came 16 situés sur la pièce 4, de sorte à permettre le déplacement réversible de la pièce 4 entre l'une et l'autre de ses deux positions.

Dans la variante des figures 1, et 3 à 5, chaque suiveur de came 16 est formé d'une extension radiale 19 de la paroi 8, un ergot 20 s'étendant radialement vers l'intérieur étant disposé sur ladite extension 19, la came 14 étant formée d'une surface inclinée 21 réalisée sur la paroi 15 de la partie cylindrique 13.

Dans la variante de la figure 2, chaque suiveur de came 16 est formé d'une extension axiale 17 de la paroi 8, l'extrémité 17' de l'extension 17 étant recourbée radialement vers l'intérieur, la paroi 15 de la partie cylindrique 13 étant découpée de sorte à obtenir une surface inclinée 18 sur laquelle le suiveur de came 16 se déplace.

On décrit à présent, en relation avec la figure 2, le montage du système 1 qui est effectué en plusieurs étapes successives.

Dans une première étape, on dispose, sur la surface supérieure 9 de la pièce 4, un ressort hélicoïdal 22. Le ressort 22 est maintenu en position sur la pièce 4 en prévoyant qu'une spire 23 vienne s'engager dans l'extension radiale 7, en étant maintenue contre la paroi 8. Les spires de ce ressort 22 sont maintenues en compression par les extrémités 17', de sorte à faciliter le montage de l'ensemble pièce 4-ressort 22 à l'intérieur de la gaine 3.

Dans une deuxième étape, l'ensemble pièce 4-ressort 22 est inséré à l'intérieur de la gaine 3, suivant la flèche F1, dans un logement 24 de forme adaptée. Ce logement 24 comprend une butée intérieure 25 destinée à coopérer avec l'extension radiale 7 de la pièce 4, celle-ci venant en appui sur ladite butée 25.

Lors d'une troisième étape, l'organe 11 est inséré dans la gaine 3, suivant la flèche F2. La poignée 12 est alors disposée au-dessus de la surface supérieure 26 de la gaine 3 qui comprend des butées de rotation 27 et 27' de ladite poignée 12.

Le ressort 22 est agencé pour coopérer avec l'organe 11 de sorte que, lorsque la pièce de blocage 4, le ressort 22 et l'organe 11 sont montés à l'intérieur de la gaine 3, la spire supérieure du ressort 22 soit en appui contre la surface inférieure 29 de la partie cylindrique 13. Ainsi, le ressort 22 exerce un appui sur la partie annulaire 6 de la pièce 4 et, l'extension radiale 7 de ladite pièce 4 demeurant en appui contre la butée 25, l'effort résultant induit une inclinaison de l'axe Z' de l'orifice 5 de la pièce 4 par rapport à l'axe Z de la tige 2.

Dans la variante de la figure 2, la came 14 comprend une gorge 18' qui est agencée pour permettre le placement de l'extrémité 17' contre la surface 18.

En outre, la partie cylindrique 13 comprend une saillie 28 qui permet au ressort 22 de remplir la fonction supplémentaire d'assistance au retour de l'organe 11 dans sa position inactive. A cet effet, lors de l'insertion, la saillie 28 est engagée dans la spire supérieure 23'.

En particulier, il peut être prévu, lors de l'introduction de l'organe 11 dans la gaine 3, de précontraindre le ressort 22 en rotation de sorte à améliorer l'effort de rappel. Pour ce faire, la poignée 12 est d'abord disposée dans une position diamétralement opposée à la position extrême de l'organe 11, jusqu'à ce que la saillie 28 vienne s'engager dans la spire 23', puis la poignée 12 est tournée dans sa position inactive, ladite rotation induisant la précontrainte du ressort 22. L'organe 11 est alors maintenu dans cette position inactive précontrainte, par la butée de rotation 27.

En variante, non représentée, la fonction supplémentaire d'assistance au retour de l'organe 11 dans sa position inactive peut être exercée par un ressort supplémentaire contraint en rotation, distinct du ressort 22 qui peut alors être contraint uniquement en compression.

Le diamètre de l'orifice 5 et le diamètre de la tige 2 sont prévus pour que l'inclinaison de la pièce 4 vers le bas ait pour conséquence le blocage de la translation de la tige 2 suivant Z. En particulier, le diamètre de l'orifice 5 peut être agencé pour que l'angle α soit voisin de 15° degrés, et que l'angle α' soit voisin de 0 degrés.

La présence d'une courbure 30 sur le pourtour de l'orifice 5 diminue l'éraillement de la tige 2, dû au frottement avec la pièce 4.

L'étape suivante du montage consiste à insérer un cavalier 31, suivant les flèches F3 et F3', dans des orifices 32 de la gaine 3 qui sont en regard de deux rainures 33 diamétralement opposées prévues dans la partie cylindrique 13. Ce cavalier 31 est destiné à associer la pièce de blocage 4, l'organe 11 et le ressort 22, de sorte à bloquer l'organe 11 en translation tout en laissant sa rotation libre.

En variante, non représentée, on peut prévoir un système 1 dépourvu de cavalier 31, dans lequel d'autres moyens spécifiques, par exemple de type baïonnette, permettent d'associer la pièce de blocage 4, l'organe 11 et le ressort 22 à l'intérieur de la gaine 3.

Lorsque le système est réalisé selon la variante des figures 1, et 3 à 5, son montage est analogue à celui qui vient d'être décrit, la différence principale résidant dans le fait que le ressort 22 est logé à l'intérieur de la partie cylindrique 13 et est maintenu axialement par une portée 34 située à l'intérieur de ladite partie cylindrique 13.

On décrit à présent le fonctionnement du système 1 dans le mode de réalisation considéré, en relation avec les figures 3 à 5.

Une fois le montage dudit système 1 réalisé, la pièce de blocage 4 est dans sa première position, dans laquelle elle bloque la translation de la tige 2 par arc-boutement (figures 3a et 3b).

Pour permettre le libre coulissement de la tige 2 dans les deux directions Z⁺ et Z⁻, il est alors nécessaire de faire passer l'organe 11 dans sa deuxième position extrême : cette position est obtenue en déplaçant l'organe 11 en rotation par rapport à la surface supérieure de la gaine, par l'intermédiaire de la poignée 12 (Figures 4a et 4b), d'un angle par exemple de l'ordre de 45°.

Cette rotation entraîne les suiveurs de came 16 vers l'extrémité supérieure 35 de la surface inclinée 18 des cames 14 ce qui induit la translation vers le haut de la pièce 4 jusqu'à sa deuxième position, en comprimant le ressort 22.

Pour parvenir à cette deuxième position, l'amplitude de la rotation et l'inclinaison des cames 14 sont agencées pour que l'axe Z' de l'orifice 5 soit incliné par rapport à l'axe Z d'un angle α' inférieur à α, de sorte à libérer la translation de la tige 2 en diminuant l'effort de serrage appliqué par l'orifice 5 sur la tige 2.

Puis, lorsque la tige 2 est réglée à la hauteur voulue, l'utilisateur relâche la poignée 12. Celle-ci, sous l'action du ressort 22, effectue une rotation de sorte à faire revenir l'organe 11 dans sa position inactive. Cette rotation a pour conséquence de placer, sous l'action du ressort 22, la pièce 4 dans sa première position, ce qui entraîne le blocage de la tige 2 à la hauteur voulue, et de replacer les suiveurs de came 16 sur la partie inférieure 36 des cames 14.

En variante, non représentée, on peut prévoir un système 1 dépourvu de ressort 22, par exemple en prévoyant que chaque suiveur de came 16 s'engage à l'intérieur d'une gorge, les deux gorges étant agencées pour provoquer une inclinaison de la pièce 4. Dans cette réalisation, le système 1 peut également être dépourvu de butée 25, en ce que le déplacement de la pièce 4 est alors guidé par les gorges.

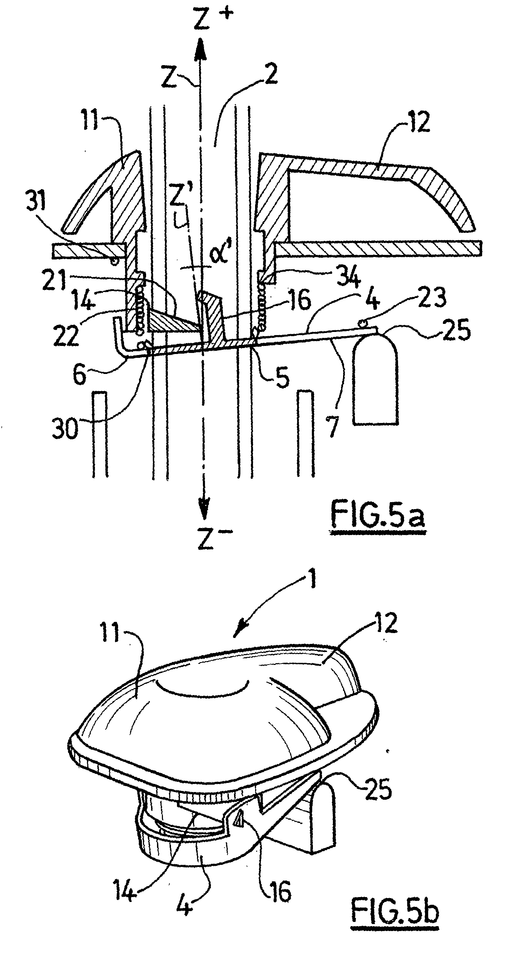

La translation de la tige 2 seulement dans la direction Z⁺ est également possible lorsque la pièce 4 est dans sa première position, et ce de par la géométrie des moyens d'actionnement. En effet, et comme représenté sur les figures 5a et 5b, la translation de la tige 2 vers le haut entraîne le soulèvement de la pièce 4 par frottement.

La pièce 4 passe ainsi de sa première position à sa deuxième position dans laquelle l'axe Z' est incliné par rapport à l'axe Z d'un angle α'. Dans ce cas de figure, les suiveurs de came 16 ne sont plus en contact avec les cames 14 de l'organe 11.

En outre, lorsque le déplacement en Z⁺ est interrompu, la pièce 4, sous l'action du ressort 22, revient dans sa première position, les suiveurs de came 16 étant de nouveau en contact avec les cames 14.

Un tel système présente l'avantage d'être compact, de pouvoir être monté de façon simple, et d'être facilement utilisable par simple déplacement manuel de l'organe 11.

En outre, l'organe 11 et la gaine 3 sont classiquement en matériau plastique et peuvent être obtenus par exemple par une technique de moulage par injection. Cette technique est particulièrement appropriée en ce qu'elle est bien adaptée aux cadences et coûts en vigueur dans l'industrie automobile.

## Revendications

1. Système (1) de déplacement et de blocage en translation d'une tige lisse (2), du type comprenant une gaine (3) destinée à recevoir en translation ladite tige (2) suivant un axe Z, ledit système (1) comprenant un dispositif d'actionnement et une pièce de blocage (4) pourvue d'un orifice (5) destiné à recevoir ladite tige (2), ledit dispositif d'actionnement comprenant des moyens d'actionnement de ladite pièce (4) qui sont agencés pour coopérer avec des moyens réciproques prévus sur ladite pièce (4), de sorte à permettre le déplacement réversible de la pièce (4) depuis une première position dans laquelle l'axe Z' de l'orifice (5) est incliné par rapport à l'axe Z d'un angle α suffisant pour permettre le blocage de la tige (2) dans ledit orifice (5), et une deuxième position dans laquelle l'axe Z' est incliné par rapport à l'axe Z d'un angle α' inférieur à α, de sorte que la translation de la tige (2) soit libre, les moyens d'actionnement comprenant au moins une came (14) prévue sur un organe (11), les moyens réciproques étant formés d'au moins un suiveur de came (16), l'organe (11) étant mobile en rotation entre une première position inactive et une deuxième position extrême, le passage de l'organe (11) de la première à la deuxième position actionnant le déplacement de la pièce (4) depuis sa première vers sa deuxième position, les moyens d'actionnement comprenant un ressort (22) comprimé entre l'organe (11) et la pièce de blocage (4), ledit système étant **caractérisé en ce qu'**il comprend un cavalier (31) associant la pièce (4), l'organe (11) et le ressort (22).

2. Système (1) selon la revendication 1, **caractérisé en ce que** l'organe (11) comprend une saillie (28) destinée à venir s'engager dans le ressort (22), de sorte à assister le retour dudit organe (11) depuis sa deuxième position extrême vers sa position inactive.

3. Système (1) selon la revendication 1 ou 2, **caractérisé en ce que** les moyens d'actionnement comprennent une butée (25) prévue sur la gaine (3) qui est destinée à coopérer avec une extension radiale (7) de la pièce de blocage (4).

4. Système (1) selon l'une quelconque des revendications 1 à 3, **caractérisé en ce que** les moyens d'actionnement et les moyens réciproques sont agencés pour, lors d'une translation de la tige (2) en Z⁺, permettre le passage de la pièce (4) depuis sa première vers sa deuxième position et, lors du déplacement de la tige (2) en Z⁻, maintenir la pièce (4) dans sa première position.

5. Utilisation du système (1) selon l'une quelconque des revendications 1 à 4, pour le déplacement et le blocage en translation d'au moins une tige lisse (2) d'un appui-tête pour siège de véhicule automobile.

## Claims

1. A system (1) for moving and locking a smooth rod (2) with respect to translation, of the type comprising a sheath (3) intended to receive the said rod (2) in translation along an axis Z, the said system (1) comprising an actuation device and a locking piece (4) provided with an orifice (5) intended to receive the said rod (2), the said actuation device comprising means of actuating the said piece (4) which are arranged so as to cooperate with reciprocal means provided on the said piece (4), so as to allow the reversible movement of the piece (4) from a first position in which the axis Z' of the orifice (5) is inclined with respect to the axis Z by an angle α sufficient to allow the locking of the rod (2) in the said orifice (5), and a second position in which the axis Z' is inclined with respect to the axis Z by an angle α' less than α, so that the translation of the rod (1) is free, the actuation means comprising at least one cam (14) provided on a member (11), the reciprocal means being formed by at least one cam follower (16), the member .(11) being able to move in rotation between a first inactive position and a second extreme position, the passage of the member (11) from the first to the second position actuating the movement of the piece (4) from its first to its second position, the actuation means comprising a spring (22) compressed between the member (11) and the locking piece (4), the said system being **characterised in that** it comprises a link (31) associating the piece (4), the member (11) and the spring (22).

2. A system (1) according to claim 1, **characterised in that** the member (11) comprises a projection (28) intended to come to be engaged in the spring (22), so as to assist the return of the said member (11) from its second extreme position to its inactive position.

3. A system (1) according to claim 1 or 2, **characterised in that** the actuation means comprise a stop (25) provided on a sheath (3) which is intended to cooperate with a radial extension (7) of the locking piece (4).

4. A system (1) according to any one of claims 1 to 3, **characterised in that** the actuation means and the reciprocal means are arranged so as, when the rod (2) is translated along Z⁺, to allow the passage of the piece (4) from its first to its second position and, when the rod (2) moves along Z⁻, to maintain the piece (4) in its first position.

5. The use of the system (1) according to any one of claims 1 to 4, for the movement and locking with respect to translation of at least one smooth rod (2) of a headrest for a motor vehicle seat.

## Patentansprüche

1. System (1) zum Verschieben und Blockieren eines glatten Stiftes (2) in Translation von der Art, umfassend eine zur Aufnahme des genannten Stiftes (2) gemäß einer Achse Z in Translation bestimmte Hülse (3), wobei das genannte System (1) eine Betätigungsvorrichtung und ein mit einer zur Aufnahme des genannten Stiftes (2) bestimmte Öffnung (5) versehenes Blockierstück (4) umfasst, wobei die genannte Betätigungsvorrichtung Betätigungsmittel des genannten Stücks (4) umfasst, die angeordnet sind, um mit auf dem genannten Stück (4) vorgesehenen gegenseitigen Mitteln zusammenzuwirken, so dass die reversible Verschiebung des Stücks (4) von einer ersten Position, in der die Achse Z' der Öffnung (5) im Verhältnis zur Achse Z um einen zum Blockieren des Stiftes (2) in der genannten Öffnung (5) ausreichenden Winkel α geneigt ist, und einer zweiten Position, in der die Achse Z' im Verhältnis zur Achse Z um einen Winkel α', der kleiner ist als der Winkel α, geneigt ist, so dass die Translation des Stiftes (2) frei ist, erlaubt wird, wobei die Betätigungsmittel wenigstens eine auf einem Organ (11) vorgesehene Nocke (4) umfassen, wobei die gegenseitigen Mittel wenigstens von einem Nockenbegleiter (16) gebildet werden, wobei das Organ (11) in Rotation zwischen einer ersten inaktiven Position und einer zweiten Endposition mobil sind, wobei der Übergang des Organs (11) von der ersten zur zweiten Position die Verschiebung des Stücks (4) von seiner ersten in seine zweite Position betätigt, wobei die Betätigungsmittel eine zwischen dem Organ (11) und dem Blockierstück (4) komprimierte Feder (22) umfassen, wobei das genannte System **dadurch gekennzeichnet ist, dass** es einen das Stück (4), das Organ (11) und die Feder (22) verbindenden Reiter (31) umfasst.

2. System (1) gemäß Anspruch 1, **dadurch gekennzeichnet, dass** das Organ (11) einen zum Einrasten in die Feder (22) bestimmten Vorsprung (28) umfasst, so dass die Rückkehr des genannten Organs (11) von seiner zweiten Endposition in seine inaktive Position unterstützt wird.

3. System (1) gemäß Anspruch 1 oder 2, **dadurch gekennzeichnet, dass** die Betätigungsmittel einen auf der Hülse (3) vorgesehenen Anschlag (25) umfassen, der dazu bestimmt ist, mit einer radialen Ausdehnung (7) des Blockierstücks (4) zusammenzuwirken.

4. System (1) gemäß Anspruch 1 bis 3, **dadurch gekennzeichnet, dass** die Betätigungsmittel und die gegenseitigen Mittel angeordnet sind, um bei einer Translation des Stiftes (2) in Z⁺ den Übergang des Stücks (4) von seiner ersten in seine zweite Position zu erlauben und bei der Verschiebung des Stiftes (2) in Z⁻ das Stück (4) in seiner ersten Position zu halten.

5. Einsatz des Systems (1) gemäß Anspruch 1 bis 4 zur Verschiebung und zum Blockieren in Translation wenigstens eines glatten Stifts (2) einer Kopfstütze für einen Kraftfahrzeugsitz.
